# EUROPEAN PATENT APPLICATION

(11) **EP 4 220 428 A1**
(43) Date of publication of application: **02.08.2023**
(21) Application number: 22153967.9
(22) Date of filing: 28.01.2022
(51) Int. Cl.: G06F 16/22, G06F 16/2453

(54) **GENERATION OF AN INDEX FOR A DATA STORAGE**

(71) Applicant: Siemens Aktiengesellschaft, 80333 München (DE)
(72) Inventor: Sauer, Markus, 81739 München (DE); Zupan, Nejc, 80337 München (DE)
(74) Representative: Siemens Patent Attorneys

(57) **Abstract**

The invention provides a system (SYS) and a computer-implemented method for generation of indices for a data storage. The system (SYS) comprises:
- an interface (IF) configured to couple the system to the data storage,
- an operation module (CM) configured to set an operational objective for the system,
- a first monitoring module (DSM) configured to monitor a data structure of data stored in the data storage,
- a second monitoring module (QM) configured to monitor an executed data query querying data stored in the data storage,
- a third monitoring module (RM) configured to monitor a usage of resources by a host environment of the data storage,
- a generator (IGE) configured to generate an index generation command (IGC) with regard to the operational objective (OBJ) and depending on the data structure (ST), a type of the data storage (TYP), the data query (DQ) and the usage of resources (RE), wherein the index generation (IGC) command comprises instructions for generating an index for the data storage,
and
- an application module configured to apply the index generation command to the data storage for generating an index.

## Description

The present invention relates to a system and a computer-implemented method for generation of an index for a data storage, as well as a computer program product.

Many IT systems are diverse in terms of the system types they are integrating and in terms of their deployment. As the IT systems are becoming increasingly connected to optimize business processes (e.g., logistics' life cycle tracking, digital threads, data marketplaces, IIoT, etc.), the variety of applications with different data structures, data persistence technologies and programming languages being integrated together is increasing. Additionally, this results in distributed and decentralized IT systems spanning across multiple locations, deploy environments and business who govern their part of data and infrastructure.

This poses a big challenge for optimization of data querying and retrieving capabilities because manual analysis and defining indices of data structures and data queries cannot keep up with the increasing amount of dynamic data structures and queries used to represent and retrieve those data. In addition, the applications and hereby the usage demand and the demand on performant querying and retrieving of data might significantly change during runtime of the system. An index or index structure is used to allow fast queries/access to data in a data storage or database. Furthermore, an index can be used to sort large data sets according to given criteria. Manual optimization and indexing approaches usually are not scalable, will not result in optimal solution, and might not even be possible due to a decentralized nature of the data and the dynamic usage of data querying.

An example of such decentralized system is an energy data marketplace, which consists of many different sub-systems and a wide variety of client applications performing different types of tasks (automatic trading, forecasting, monitoring and measuring, ...) and queries, all of which produces and consumes data with different and very often dynamic data structures. During the systems' operation, client systems are often updated, exchanged, which brings additional new requirements in terms of querying capabilities, all of which cannot be planned during the system design, creation and setup. This often results in slow querying and data retrieval because the system cannot be manually optimized by updating or generating new indices quick enough.

Often, manual optimization is hardly possible due to the distributed and decentralized nature of the systems. Systems are deployed across many different environments (e.g., data centers, industrial buildings, power plants, customers' homes, ...) which sometimes cannot be accessed remotely (e.g., due to the security restrictions or due to the lack of infrastructure). Another limiting factor is the decentralized nature of such systems. Every sub-system may be owned and operated by different stakeholders, making central management and optimization impossible.

It is therefore an objective of the present invention to provide an automatic index generation.

The object is solved by the features of the independent claims. The dependent claims contain further developments of the invention.

The invention provides according to the first aspect a system for generation of an index for a data storage, comprising:
- an interface configured to couple the system to the data storage,
- an operation module configured to set an operational objective for the system,
- a first monitoring module configured to monitor a data structure of data stored in the data storage,
- a second monitoring module configured to monitor an executed data query querying data stored in the data storage,
- a third monitoring module configured to monitor a usage of resources by a host environment of the data storage,
- a generator configured to generate an index generation command with regard to the operational objective and depending on the data structure, a type of the data storage, the data query and the usage of resources, wherein the index generation command comprises instructions for generating an index for the data storage,
   and
- an application module configured to apply the index generation command to the data storage for generating an index.

Unless indicated otherwise in the description below, the terms "perform", "calculate", "computer-aided", "compute", "discover", "generate", "configure", "reconstruct" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, processors, and other electronic devices for data processing.

Within the context of embodiments of the invention, a processor can be understood to mean for example a machine or an electronic circuit. A processor can be in particular a central processing unit (CPU), a microprocessor or a microcontroller, for example an application-specific integrated circuit or a digital signal processor, possibly in combination with a memory unit for storing program instructions, etc. A processor can, by way of example, also be an IC (integrated circuit), in particular an FPGA (field programmable gate array) or an ASIC (application-specific integrated circuit), or a DSP (digital signal processor) or a graphics processor GPU (graphics processing unit). A processor can also be understood to mean a virtualized processor, a virtual machine or a soft CPU. It can, by way of example, also be a programmable processor that is equipped with configuration steps for carrying out the method according to embodiments of the invention or that is configured by means of configuration steps such that the programmable processor realizes the features according to embodiments of the invention for the method, the component, the modules or other aspects and/or sub-aspects of embodiments of the invention.

Within the context of embodiments of the invention, a "module" can be understood to mean for example a processor and/or a memory unit for storing program instructions. By way of example, the processor is configured specifically to execute the program instructions such that the processor performs functions to implement or perform the method according to embodiments of the invention or a step of the method according to embodiments of the invention.

Within the context of embodiments of the invention, "assign", in particular in regard to data and/or information, can be understood to mean for example computer-aided assignment of data and/or information.

Within the context of embodiments of the invention, "provide", in particular in regard to data and/or information, can be understood to mean for example computer-aided provision. Provision is effected for example via an interface (e.g. a database interface, a network interface, an interface to a memory unit). This interface can be used for example to convey and/or send and/or retrieve and/or receive applicable data and/or information during the provision.

Within the context of embodiments of the invention a "data storage" can for example be a database, a blockchain, a data processing pipeline, a file storage, an object storage, etc..

It is an advantage of the invention that an index (for, e.g., efficient data query) or multiple indices can be generated automatically. The system is in particular technology and/or data structure agnostic and can be run in parallel to the data storage. Hence, the system is easily scalable. Time and/or resources, e.g., computing resources, spent on identifying querying bottlenecks and deriving a custom solution to each data query can be drastically decreased. Therefore, power consumption can be reduced and/or slow performing queries can be eliminated.

According to a preferred embodiment of the system, the generator may further be configured to generate the index generation command by means of a trained machine learning model which is trained to output an index generation command based on data queries, an operational objective and/or on the type of the data storage.

A trained machine learning model can be an artificial intelligence (AI) algorithm, e.g., an artificial neural network, random forests, or support vector machines. It can be for example trained using data query data/data queries, an operational objective and/or type of data storage as input training data and previously assigned index generation commands. The output are observed metadata that can be compared against the input set of metadata and verified if the operational objectives were improved/satisfied. Therefore, the index generation can be AI-based. Furthermore, the machine learning model can be continuously improved using respective monitoring data or metadata.

An example can be reinforcement learning (RL) where the training agent learns to achieve a goal in an uncertain and often potential environment. Actions that were tried out when searching for optimal solution can be rewarded if the result improved or can be penalized if the result worsened. To set penalties and rewards, monitoring feedback can be taken to compare new metadata against the metadata that needed optimization. RL Actions would be in the proposed invention the different variants of index generation commands, RL observations the provided metadata, RL reward/penalty related the increase or decrease in the overall performance of the queries.

According to a further embodiment of the system, the machine learning model may be trained based on monitoring data provided by the first, second and/or third monitoring module, respectively.

According to another embodiment of the system, the generator may be configured to generate the index generation command at a certain point in time or in certain time steps.

Preferably, the index generation can be triggered based on certain events, e.g., slow query performance when querying data from the data storage. Performing index generation on specified times further prevents continuous re-indexing, which could degrade the overall performance of the data storage.

According to a preferred embodiment of the system, the second monitoring module may further be configured to analyse metadata of the executed data queries and wherein the generator is further configured to generate an index generation command also depending on the metadata.

Metadata can for example be parameters of the data query, an execution speed and/or an execution plan (i.e., a sequence of steps that are executed for accessing the data that are being queried). The metadata can be for example used to improve the generation of the index generation command.

According to a preferred embodiment, the system may further comprise a testing module configured to evaluate the generated index generation command, wherein
- the index generation command is applied to a model of the data storage and at least one test index is generated,
- the at least one data query (i.e., a set of data queries) is run on the model of the data storage using the at least one test index,
- test metadata of the at least one data query are provided,
- the test metadata are checked against respective metadata of the executed data query,
   and,
- and an evaluation result is output.

According to another embodiment of the system, the application module may be configured to apply the index generation command to the data storage depending on the evaluation result.

A testing module can be for example a sandbox environment. The testing module preferably comprises an instance of the data storage such that the generated index generation command can be tested before applying it to the data storage.

According to another embodiment of the system, the data storage may be distributed and/or decentralized, and at least two index generation commands may be generated and sent to respective parts of the distributed data storage.

For example, the data storage can be a distributed and/or a decentralized database which is distributed across multiple host environments. The generator can then be configured to provide index generation commands for different nodes of the database. Then, the generated index generation commands can be shared across the distributed data storage.

According to another embodiment of the system, the generator may be run by the host environment of the data storage.

This has the advantage of higher degree of privacy and/or better usage of computing resources.

According to another embodiment of the system, the operation module may be configured to set an operation mode of the system.

According to another embodiment of the system, the application module may be configured to apply the index generation command to the data storage depending on the operation mode.

An operation mode may for example be fully automatic or semi-automatic, wherein the latter may involve an additional confirmation before applying the index generation command to the data storage.

According to a second aspect, the invention provides a computer-implemented method for index generation for a data storage, comprising the method steps:
- coupling the system to the data storage,
- setting an operational objective for the system,
- monitoring a data structure of data stored in the data storage, an executed data query querying data stored in the data storage, and a usage of resources by a host environment of the data storage,
- generating an index generation command with regard to the operational objective and depending on the data structure, a type of the data storage, the data query and the usage of resources, wherein the index generation command comprises instructions for generating an index for the data storage,
   and
- applying the index generation command to the data storage for generating an index.

In addition, a computer program product (non-transitory computer readable storage medium having instructions, which when executed by a processor, perform actions) having program instructions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
- Fig. 1:: an exemplary embodiment of the system for generation of an index for a data storage; and
- Fig. 2: an exemplary embodiment of the computer-implemented method for generation of an index for a data storage.

Equivalent parts in the different figures are labeled with the same reference signs.

A person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components), or by a combination of hardware and software (components).

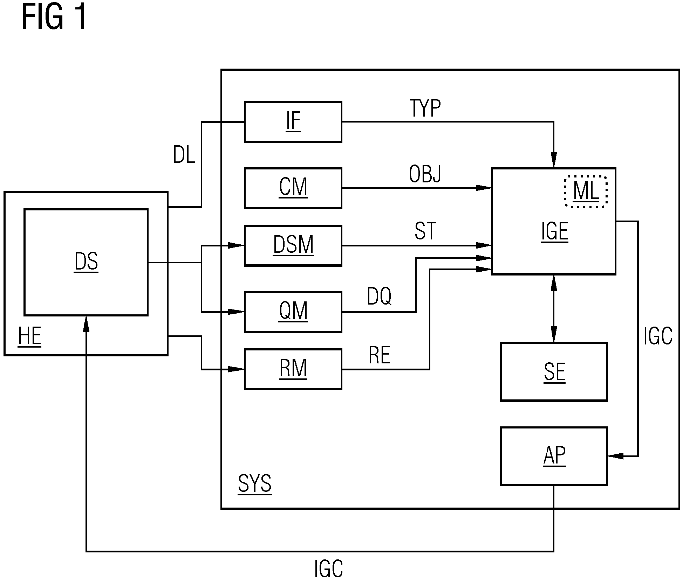

Figure 1 shows a block diagram illustrating an embodiment of the system SYS for generation of an index or of indices for a data storage DS.

The data storage DS is run in a host environment HE. The host environment HE can be for example a computing resource running the data storage. The system SYS is connected to the data storage DS and the host environment via a data connection DL, such that the system SYS can send and/or receive data from the data storage DS and/or the host environment HE.

The data storage DS can be further connected to multiple devices configured to query data from the data storage DS. The system SYS provides index generation commands IGC, which are configured to create at least one index for the data storage enabling efficient data queries.

The system SYS comprises an interface IF, an operation module CM, a first monitoring module DSM, a second monitoring module QM, a third monitoring module RM, a generator IGE, and an application module AP. The system SYS can further comprise a testing module SE. The modules are preferably connected to each other, such that data can be exchanged between the modules.

It is also possible that the system SYS comprises only one monitoring module wherein said one monitoring module has the functionality of the first, second and third monitoring module.

Furthermore, it is also possible that the generator IGE is run by the host environment HE of the data storage DS or by another host environment.

The interface IF is configured to connect the system SYS to the data storage DS. Preferably, the interface is configured to determine a type TYP of data storage.

The operation module CM is configured to set an operational objective for operating the system. The operational objective relates to the index generation. To this end, the operation module CM sends the operational objective to the generator IGE. For example, the operational objective can be set to minimizing use of computational resources, minimizing RAM consumption, or maximizing query performance. Furthermore, the configuration module CM is configured to set an operation mode of the system, e.g., a full automatic or semi-automatic mode with respect to applying the generated index generation command to the data storage.

The first monitoring module DSM is configured to monitor a data structure of data stored in the data storage DS. The first monitoring module monitors DSM analyses the data structure of artefacts stored in the data storage.

The second monitoring module QM is configured to monitor at least one executed data query (or a set of data queries) querying data stored in the data storage. Preferably, the second monitoring modules analyses all executed data queries sent to the data storage. In particular, metadata of the executed data queries are analysed. Metadata can for example be query parameters, an execution speed and/or an execution plan.

The third monitoring module RM is configured to monitor a usage of resources by the host environment HE of the data storage. For example, the third monitoring module RM monitors used and available resources, e.g., processing power, storage, or temporary data storage space (RAM).

The first, second and third monitoring modules provide the respective monitored data to the generator IGE. The generator IGE is configured to generate at least one index generation command with regard to the operational objective OBJ and depending on the data structure ST and a type of the data storage TYP, the data query DQ and the usage of resources RE. The index generation command (or the index generation commands) comprises instructions for generating an index for the data storage. The generator IGE is further configured to generate an index generation command IGC also depending on metadata of the data queries.

The generator IGE is further configured to generate the index generation command by means of a trained machine learning model ML. The trained machine learning model, e.g., an artificial neural network, can be trained to output an index generation command based on given data queries, an operational objective and/or on the type of the data storage. Preferably, the machine learning model ML can be improved using monitoring data provided by the first, second and/or third monitoring module to validate the generated index commands.

The generator IGE is preferably configured to generate the index generation command at a certain point in time or in certain time steps.

The generator IGE is preferably configured to generate an optimized index generation command in order to improve for example a query performance. In other words, based on the given monitoring data, the generator IGE provides an automatic index generation which improves querying data from the data storage.

The generated index generation command IGC is transferred to the application module AP. The application module AP is configured to apply the index generation command IGC to the data storage DS for generating an index. The index can then be generated by the data storage DS executing the index generation command IGC.

The testing module SE is configured to evaluate the generated index generation command IGC. The testing module SE can for example be a sandbox environment running an instance and/or a replicate of the data storage DS. The index generation command IGC is applied to the instance of the data storage and a test index is generated. Then, test data queries are run on the instance of the data storage using the test index, resulting in test metadata of the data query, like, e.g., query performance parameters. The test metadata are checked against respective metadata of the executed data query on the data storage. The check result is provided. The application module AP can apply the index generation command IGC depending on the check result. If the check finds that the index generation command IGC results for example in an improved query performance and/or resource consumption, the index generation command IGC can be applied to the data storage DS.

The data storage DS can for example be a distributed and/or decentralized data storage. In such case, the generator can be configured to share the generated index generation command IGE, e.g., fully or sharded, across the distributed data storage. In addition, the generator IGE can also provide an optimization regarding addressing artefact locations discovery as a result on querying, e.g., based on distributed Hash tables. The optimization result derived from the data queries can also be used together with the indices to optimize the storage distribution of the data.

The system SYS can automatically analyse query data, data structure and operational data in order to create, preferably during runtime, indexing commands IGC for an artefact persistence solution DS to continuously optimize the querying performance of the artefact persistence solution to current application demands. The system SYS therefore does not require any changes of the existing data processing pipelines and persistence engines. It can also be deployed alongside a data storage and configured with an appropriate access level. Based on the configuration mode, the system SYS can be operated in fully automatic mode or in semi-automatic mode, wherein the latter requires for example manual confirmation of executing commands.

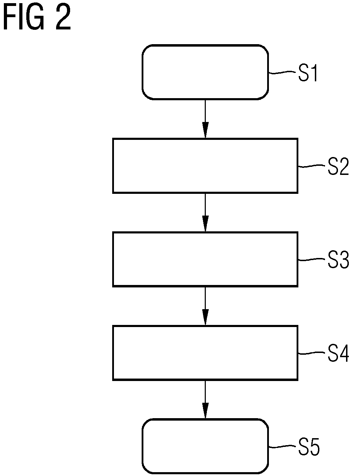

Figure 2 shows a flow chart illustrating an embodiment of the computer-implemented method for index generation for a data storage.

In the first step S1 the system for index generation is coupled to the data storage by means of an interface.

In the next step S2 an operational objective is set for the system, wherein the operational objective can be for example minimization of query time.

In the next step S3 a data structure of data stored in the data storage is monitored. Furthermore at least one executed data query querying data stored in the data storage, and a usage of resources by a host environment of the data storage is monitored. Respective monitoring data are provided.

In the next step S4 an index generation command with regard to the operational objective and depending on the data structure and a type of the data storage, the data query and the usage of resources is generated. The index generation command comprises instructions for generating an index for the data storage.

In the next step S5 the index generation command is applied to the data storage for generating an index. Then the index generation command can be executed by the data storage and an index (structure) can be generated.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. System (SYS) for generation of an index for a data storage, comprising:
- an interface configured to couple the system (SYS) to the data storage (DS),
- an operation module (CM) configured to set an operational objective (OBJ) for the system,
- a first monitoring module (DSM) configured to monitor a data structure (ST) of data stored in the data storage,
- a second monitoring module (QM) configured to monitor an executed data query (DQ) querying data stored in the data storage,
- a third monitoring module (RM) configured to monitor a usage of resources (RE) by a host environment of the data storage,
- a generator (IGE) configured to generate an index generation command (IGC) with regard to the operational objective (OBJ) and depending on the data structure (DS), a type (TYP) of the data storage, the data query (DQ) and the usage of resources (RE), wherein the index generation command comprises instructions for generating an index for the data storage, and
- an application module (AP) configured to apply the index generation command (IGC) to the data storage for generating an index.

2. System according to claim 1, wherein generator is further configured to generate the index generation command by means of a trained machine learning model which is trained to output an index generation command (IGC) based on data queries, an operational objective and/or on the type of the data storage.

3. System according to one of the preceding claims, wherein the machine learning model is trained based on monitoring data provided by the first, second and/or third monitoring module.

4. System according to one of the preceding claims, wherein the generator is configured to generate the index generation command at a certain point in time or in certain time steps.

5. System according to one of the preceding claims, wherein the second monitoring module (QM) is further configured to analyse metadata of the executed data queries and wherein the generator is further configured to generate an index generation command also depending on the metadata.

6. System according to claim 5, further comprising a testing module (SE) configured to evaluate the generated index generation command, wherein
- the index generation command is applied to a model of the data storage and a test index is generated,
- the data query is run on the model of the data storage using the test index,
- test metadata of the data query are provided,
- the test metadata are checked against respective metadata of the executed data query,
and,
- and an evaluation result is output.

7. System according to claim 6, wherein the application module is configured to apply the index generation command to the data storage depending on the evaluation result.

8. System according to one of the preceding claims, wherein the data storage is distributed and/or decentralized and at least two index generation commands are generated and sent to respective parts of the distributed data storage.

9. System according to one of the preceding claims, wherein the generator is run by the host environment (HE) of the data storage (DS).

10. System according to one of the preceding claims, wherein the operation module is configured to set an operation mode of the system.

11. System according to claim 10, wherein the application module is configured to apply the index generation command to the data storage depending on the operation mode.

12. Computer program product directly loadable into the internal memory of a digital computer, comprising software code portions for performing the method steps of one of the preceding claims when said computer program product is run on a computer.

13. Computer-implemented method for index generation for a data storage, comprising the method steps:
- coupling (S1) the system for index generation to the data storage,
- setting (S2) an operational objective for the system,
- monitoring (S3) a data structure of data stored in the data storage, an executed data query querying data stored in the data storage, and a usage of resources by a host environment of the data storage,
- generating (S4) an index generation command with regard to the operational objective and depending on the data structure, a type of the data storage, the data query and the usage of resources, wherein the index generation command comprises instructions for generating an index for the data storage,
and
- applying (S5) the index generation command to the data storage for generating an index.
